(19) Europäisches Patentamt

European Patent Office

Office européen des brevets

(11) **EP 1 069 416 A1**

(12) **EUROPÄISCHE PATENTANMELDUNG**

(43) Veröffentlichungstag:
17.01.2001 Patentblatt 2001/03

(51) Int. Cl.$^7$: **G01K 7/42**

(21) Anmeldenummer: 00113000.4

(22) Anmeldetag: 21.06.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **12.07.1999 DE 19932079**

(71) Anmelder:
**Heraeus Electro-Nite International N.V.
3530 Houthalen (BE)**

(72) Erfinder:
• **Baerts, Christiaan
  3940 Beringen-Paal (BE)**
• **van Gerwen, Peter
  3191 Hever (BE)**

(74) Vertreter: **Kühn, Hans-Christian
Heraeus Holding GmbH,
Stabsstelle Schutzrechte,
Heraeusstrasse 12-14
63450 Hanau (DE)**

(54) **Verfahren zur Verkürzung der Ansprechzeit eines Temperatursensors**

(57) Die Erfindung betrifft ein Verfahren zur Verkürzung der Ansprechzeit eines Temperatursensors, der in der Abgasführung eines Kraftfahrzeuges angeordnet ist, mit einem PID-Regler, der die Regelparameter P, I und D aufweist. Der Erfindung liegt das Problem zugrunde, die Ansprechzeit eines Temperatursensors, der in der Abgasführung eines Kraftfahrzeuges angeordnet ist, trotz wechselnder Betriebsweise des Kraftfahrzeuges zuverlässig zu verkürzen. Das Problem wird dadurch gelöst, daß eine aktuelle Temperatur eines Abgases gemessen wird und daß ein daraus resultierendes Sensorsignal mit Hilfe eines Algorithmus mit den Regelparametern P, I, und D verrechnet wird, und daß diese Regelparameter P, I und D mit Hilfe einer Zeitkonstante τ berechnet werden und daß die Zeitkonstante τ sich in Abhängigkeit vom verwendeten Temperatursensor-Typ und seiner Anordnung aus aktuellen Motordaten ergibt, und daß ein so berechneter Signalwert zur Vorhersage eines Temperaturverlaufes verwendet wird.

EP 1 069 416 A1

**Beschreibung**

Die Erfindung betrifft ein Verfahren zur Verkürzung der Ansprechzeit eines Temperatursensors, der in der Abgasführung eines Kraftfahrzeuges angeordnet ist, mit einem PID-Regler, der die Regelparameter P, I und D aufweist.

Eine Verkürzung der Ansprechzeit eines Temperatursensors ist auf unterschiedliche Art und Weise zu erreichen.

So beschreibt die DE 44 24 384 C2 eine konstruktiv günstige Ausgestaltung eines Temperatursensors mit einer flächenhaften verformten Meßspitze, die einen schnellen Wärmeübergang von der Außenfläche der Meßspitze zum Sensorelement gewährleistet.

Dabei werden Maßnahmen, die bekannterweise verkürzend auf die Ansprechzeit eines Temperatursensors wirken, wie eine miniaturisierte Bauweise, eine Minimierung des Abstandes zwischen Meßmedium und Sensorelement und ein Einsatz von Materialien mit hohem Wärmeleitvermögen, erfolgreich eingesetzt. Für bestimmte Anwendungen sind jedoch robuste Sensoren mit stabilen Umhüllungen erforderlich, so daß die äußeren Abmessungen nicht beliebig verkleinert werden können.

Eine zusätzliche Verkürzung der Ansprechzeit eines Temperatursensors läßt sich dennoch, ohne seine konstruktive Ausgestaltung zu verändern, mit Hilfe einer rechnerischen Abschätzung des zu erwartenden Temperaturverlaufes erreichen. Die Methoden sind der Fachwelt hinreichend bekannt. So beschreibt die DE 30 16 246 C2 ein Verfahren zur Messung von Temperaturen mit einem eine Zeitkonstante aufweisenden Temperatursensor, mit dessen Hilfe zu mehreren Zeitpunkten gemessen wird. So können folgende Verfahren verwendet werden, um eine Verkürzung der Ansprechzeit zu erreichen:

Das Ansprechverhalten eines Temperatursensors kann optimiert werden, indem die gemessene Temperatur beziehungsweise das resultierende Sensorsignal — hier die Spannung $U_{gemessen}$ - mit Hilfe der Gleichung (1)

$$U_{berechnet} = U_{gemessen} + \tau * dU_{gemessen} / dt$$ modifiziert wird.

Die Kenntnis der Zeitkonstante $\tau$ genügt zur Berechnung von $U_{berechnet}$. Der Nachteil dieser Modifizierung liegt dann, daß bereits kleinste Störungen oder ein minimales Rauschen an $U_{gemessen}$ als Temperaturänderung interpretiert wird und der Wert $U_{berechnet}$ beeinflußt wird.

Die Verwendung einer Gleichung (2) $U_{berechnet} = P * U_{gemessen} + D * dU_{gemessen} / dt + I * \int U_{gemessen} \, dt$ ist demnach bereits besser geeignet, die Ansprechzeit eines Temperatursensors zu verkürzen. Dabei werden die Regelparameter P, I und D für eine bestimmte Anwendungsart und eine festgelegte Betriebsweise optimiert. Daraus ergibt sich ein optimiertes Ansprechverhalten des Temperatursensors. Bei einer veränderten Betriebsweise des Kraftfahrzeuges ändern sich jedoch die Motordaten stark. Die Regelparameter P, I und D, die vorher für eine andere Betriebsweise optimiert wurden, erweisen sich nun als ungeeignet. Es kann ein Überschwingen auftreten, welches die Zeitspanne verlängert, die das Sensorsignal bis zur Anzeige der Endtemperatur benötigt.

Im Artikel „Selbsteinstellende PID-Regler" ( atp 11/98, Automatisierungstechnische Praxis 40 (1998) 11, Seiten 50-57, Autoren: Pfeiffer, Mohr ) ist ein einfaches Konzept zur Selbsteinstellung von PID-Reglern beschrieben, das zusammen mit dem Regler softwaremäßig auf einer SPS SIMATIC S7 implementiert ist und eine automatische Inbetriebnahme ohne Parametrierung und Vorkenntnisse über den Prozeß erlaubt. Das Konzept ist speziell für Temperaturregelstrecken ausgelegt.

Die DE 23 43 511 C2 offenbart eine Regeleinrichtung mit selbsttätiger Adaption der Regelparameter des Reglers an eine Regelstrecke, wobei die Reglerparameter abhängig von den spezifischen Eigenschaften eines Bezugsmodells verstellbar sind. Das Bezugsmodell umfasst dabei mindestens eine Reihenschaltung aus einem Reglermodul und einem Regelstreckenmodul, wobei zusätzliche Filter vorgesehen sind, die einer genaueren und schnelleren Arbeitsweise dienen.

Der Artikel „Zur rechnergestützten Parameteroptimierung von PID-Reglern im Zeitbereich" ( msr, Berlin 32 (1989) 10, S. 448 — 452, Autoren: Dr. Rieger, Dr. Bischoff ) beschreibt die rechnergestützte Bemessung von PID-Reglern. Dabei wird die Struktur der Reglerübertragungsfunktion vorgegeben und nach optimalen Reglerparametern gemäß eines vorgegebenen Gütekriteriums gesucht.

Der Erfindung liegt nun das Problem zugrunde, die Ansprechzeit eines Temperatursensors, der in der Abgasführung eines Kraftfahrzeuges angeordnet ist, trotz wechselnder Betriebsweise des Kraftfahrzeuges zuverlässig zu verkürzen.

Das Problem wird dadurch gelöst, daß eine aktuelle Temperatur eines Abgases gemessen wird und daß ein daraus resultierendes Sensorsignal mit Hilfe eines Algorithmus mit den Regelparametern P, I, und D verrechnet wird, und daß diese Regelparameter P, I und D mit Hilfe einer Zeitkonstante $\tau$ berechnet werden und daß die Zeitkonstante $\tau$ sich in Abhängigkeit vom verwendeten Temperatursensor-Typ und in Abhängigkeit der Anordnung des verwendeten Temperatursensors aus aktuellen Motordaten ergibt, und daß ein so berechneter Signalwert zur Vorhersage eines Temperaturverlaufes verwendet wird. Die Zeitkonstante $\tau$ als Funktion von Sensortyp und ausgewählten Motordaten wird folgendermaßen in dem Algorithmus verwendet, den die Gleichung (3)

$$U_{berechnet} = P(\tau) * U_{gemessen} + D(\tau) * dU_{gemessen} / dt + I(\tau) * \int U_{gemessen}\ dt$$

beschreibt, mit

$U_{berechnet}$: berechneter Signalwert;
$U_{gemessen}$: Sensorsignal;
P, D, I: Anwendungsspezifische Regelparameter des PID-Reglers;
$\tau$: Zeitkonstante;
t: Zeit.

Als Motordaten kommen verfügbare Werte wie Luftmassenfluß und / oder Rotationsgeschwindigkeit und / oder Motorlast und / oder eingespritzte Kraftstoffmenge und / oder Zündverzögerung und / oder Kühlwassertemperatur und / oder Außentemperatur und / oder Öltemperatur in Betracht.

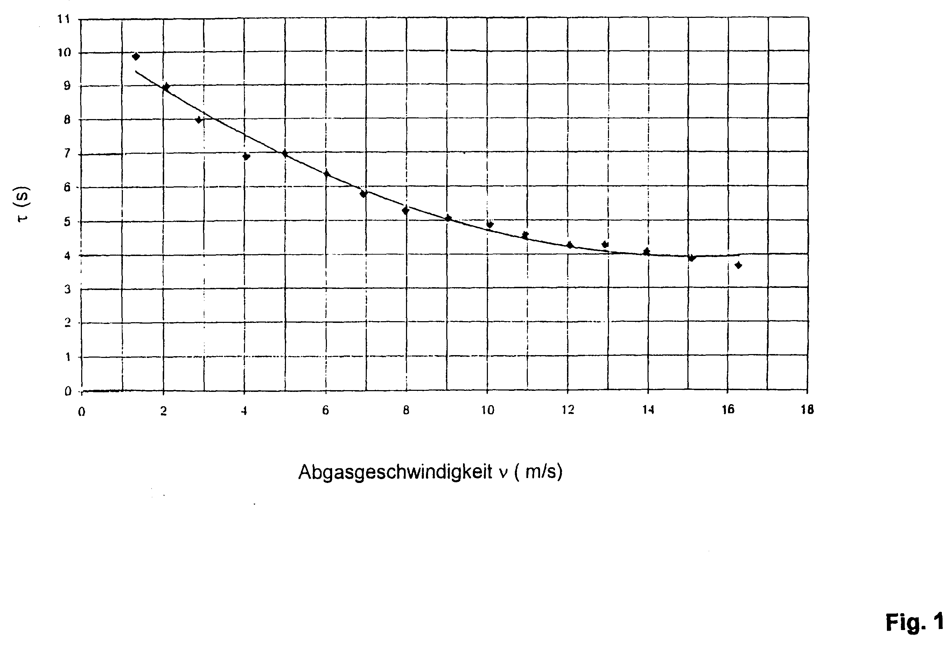

Es wurde erkannt, daß in Kraftfahrzeugen die Zeitkonstante $\tau$ überwiegend von der Abgasgeschwindigkeit $v$ abhängt (Fig. 1).

Besonders vorteilhaft ist demnach die Auswahl der Motordaten des Luftmassenflusses LMF für dieses Verfahren, da dieser proportional der Abgasgeschwindigkeit $v$ ist. Es ergibt sich eine hohe Ansprechgeschwindigkeit des Temperatursensors mit hoher Genauigkeit und geringer Anfälligkeit auf Störsignale.

Als Temperatursensor kann ein Widerstandstemperatursensor oder ein Thermoelement oder ein Thermistor verwendet werden, wobei sich als Widerstandstemperatursensor ein Platinwiderstandsensor als besonders geeignet erweist.

Nachfolgendes Beispiel und die Figuren 2 bis 3 dienen zur Erläuterung der Erfindung.

In den Figuren zeigt:

Fig. 1    die Abhängigkeit der Zeitkonstante $\tau$ von der Abgasgeschwindigkeit $v$ für einen Temperatursensor,
Fig. 2    die Temperaturmessung mit einem Widerstandstemperatursensor und
Fig. 3    eine weitere Temperaturmessung mit einem Widerstandstemperatursensor.

Beispiel:

Die Zeitkonstante $\tau$ soll hier in Abhängigkeit des Luftmassenflusses betrachtet werden, das heißt: $\tau$ = f ( Sensortyp; Luftmassenfluß LMF )

$$U_{berechnet} = U_{gemessen} + \tau * D * dU_{gemessen} / dt + I / \tau * \int U_{gemessen}\ dt$$

$$v = LMF / (\rho * A)$$

$$\tau = \alpha * v^2 + \beta * v + \gamma$$

$v$: Abgasgeschwindigkeit          A: Durchmesser des Abgasrohres
$\rho$: Dichte des Abgases          $\alpha, \beta, \gamma$: Koeffizienten 2. Ordnung, gem. Fig. 1
$\tau$: Zeitkontante          D, I: Anwendungsspezifische Regelparameter

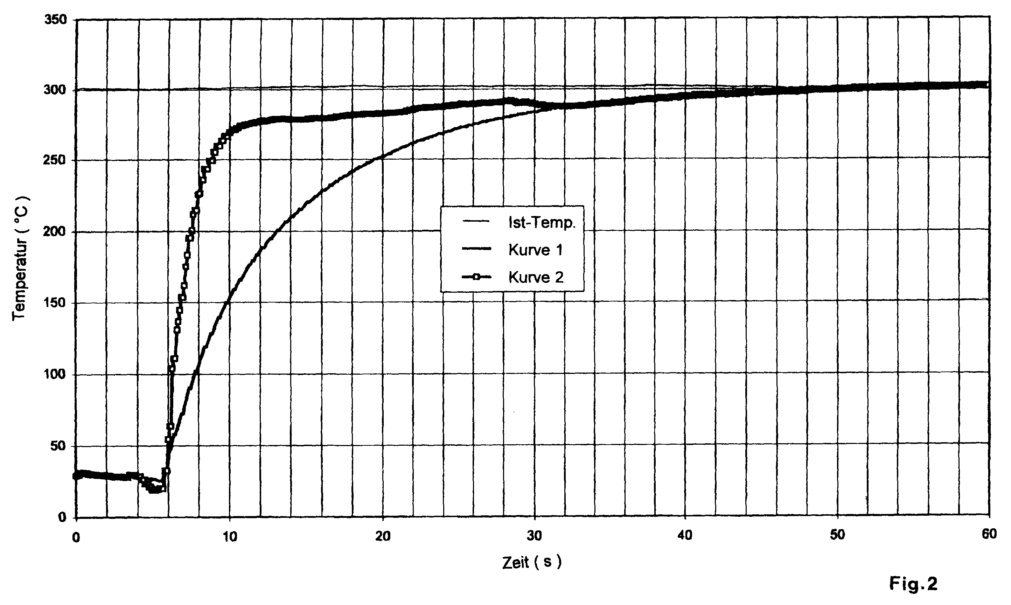

Fig. 2 zeigt eine Temperaturmessung mit einem Widerstandstemperatursensor TS200 im Abgas eines Kraftfahrzeuges bei einer Abgastemperatur von T = 300°C und einer Abgasgeschwindigkeit $v$ = 11 m/s. Der gemessene Temperaturverlauf Kurve 1 ist im Vergleich zu einem mit Hilfe der Gleichung (2) oder (3) modifizierten Temperaturverlauf Kurve 2 dargestellt. Deutlich ist die Verkürzung der Ansprechzeit bei Verwendung der Gleichungen (2) oder (3) erkennbar.

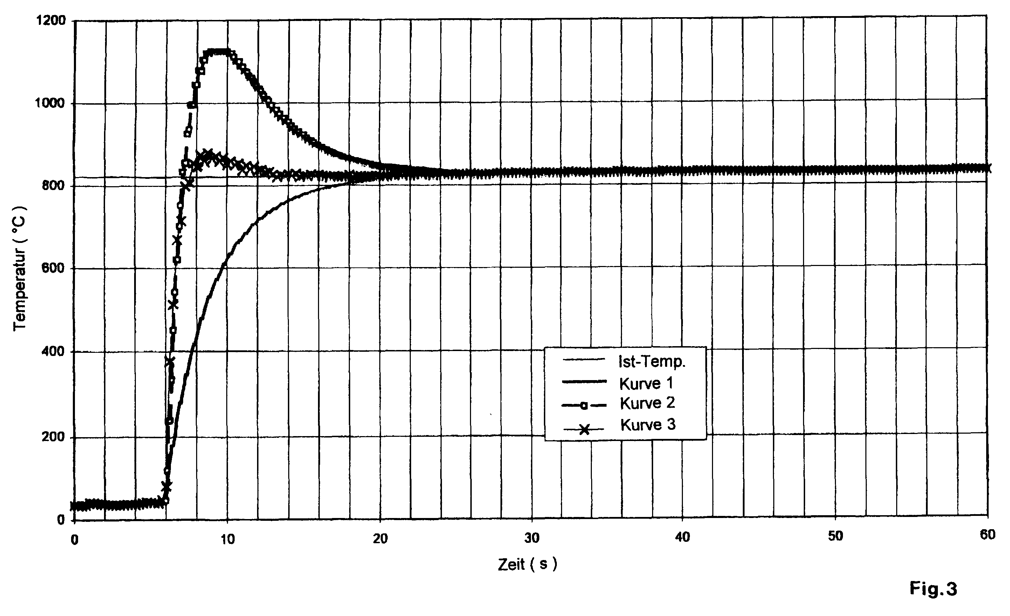

Fig. 3 zeigt eine weitere Temperaturmessung mit dem Widerstandstemperatursensor TS200 bei veränderter Betriebsweise des Kraftfahrzeuges mit einer Abgastemperatur von T = 700°C und einer Abgasgeschwindigkeit von $v$ = 70 m/s. Im Vergleich ist der gemessene Temperaturverlauf Kurve 1, der mit Hilfe der Gleichung (2) modifizierte Temperaturverlauf Kurve 2 und der nach dem erfindungsgemäßen Verfahren erlangte Temperaturverlauf Kurve 3 gezeigt. Die tatsächliche Temperatur zeigt die Kurve Ist-Temp. Hier wird der Nachteil der Anwendung der Gleichung (2) deutlich. Der Temperaturverlauf Kurve 2 weist einen Überschwinger auf, der in erster Linie aufgrund der erhöhten Abgasgeschwindigkeit auftritt und statt einer Verkürzung der Ansprechzeit eher eine Verlängerung mit sich bringt. Die Ursache hierfür stellen die Regelparameter P, I und D in Gleichung (2) dar, die nicht flexibel der aktuellen Betriebsweise des Kraftfahrzeuges angepasst werden können. Dieser Effekt wird durch die Anwendung des erfindungsgemäßen Verfahrens, wie anhand des Temperaturverlaufes Kurve 3 erkennbar, eliminiert. Aufgrund der direkten Einflußmöglichkeit auf die Regelparameter P, I und D der Gleichung (3) mit Hilfe aktueller Motordaten wird das Ansprechverhalten des Sensors auch bei einer Änderung der Betriebsweise des Kraftfahrzeuges nicht negativ beeinflusst.

**Patentansprüche**

1. Verfahren zur Verkürzung der Ansprechzeit eines Temperatursensors, der in der Abgasführung eines Kraftfahrzeuges angeordnet ist, mit einem PID-Regler, der die Regelparameter P, I und D aufweist, **dadurch gekennzeichnet**, daß eine aktuelle Temperatur eines Abgases gemessen wird und daß ein daraus resultierendes Sensorsignal mit Hilfe eines Algorithmus mit den Regelparametern P, I, und D verrechnet wird, und daß diese Regelparameter P, I und D mit Hilfe einer Zeitkonstante $\tau$ berechnet werden und daß die Zeitkonstante $\tau$ sich in Abhängigkeit vom verwendeten Temperatursensor-Typ und in Abhängigkeit von der Anordnung des verwendeten Temperatursensors aus aktuellen Motordaten ergibt, und daß ein so berechneter Signalwert zur Vorhersage eines Temperaturverlaufes verwendet wird.

2. Verfahren nach Anspruch 1, dadurch gekennzeichnet, daß der Algorithmus von einer Gleichung:

   $U_{berechnet} = P(\tau) * U_{gemessen} + D(\tau) * dU_{gemessen} / dt + I(\tau) * \int U_{gemessen} dt$ beschrieben wird, mit

   $U_{berechnet}$: berechneter Signalwert
   $U_{gemessen}$: Sensorsignal
   P, D, I: Anwendungsspezifische Regelparameter des PID-Reglers
   $\tau$ : Zeitkonstante
   t : Zeit.

3. Verfahren nach einem der Ansprüche 1 bis 2, dadurch gekennzeichnet, daß zur Bestimmung der Zeitkonstante $\tau$ Luftmassenfluß und / oder Rotationsgeschwindigkeit und / oder Motorlast und / oder eingespritzte Kraftstoffmenge und / oder Zündzeitpunkt und / oder Kühlwassertemperatur und / oder Außentemperatur und / oder Öltemperatur als aktuelle Motordaten verwendet werden.

4. Verfahren nach einem der Ansprüche 1 bis 3, daß als Temperatursensor ein Widerstandstemperatursensor oder ein Thermoelement oder ein Thermistor verwendet wird.

5. Verfahren nach Anspruch 4, dadurch gekennzeichnet, daß als Widerstandstemperatursensor ein Platinwiderstandsensor verwendet wird.

Fig. 1

Fig.2

Fig.3

EP 1 069 416 A1

Europäisches
Patentamt

# EUROPÄISCHER RECHERCHENBERICHT

Nummer der Anmeldung

EP 00 11 3000

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 5 605 040 A (GEE THOMAS S ET AL) 25. Februar 1997 (1997-02-25) * Spalte 1, Zeile 43 – Zeile 45 * | 1 | G01K7/42 |
| D,Y | DE 23 43 511 A (BBC BROWN BOVERI & CIE) 13. März 1975 (1975-03-13) * das ganze Dokument * | 1 | |
| Y | PATENT ABSTRACTS OF JAPAN vol. 009, no. 072 (P-345), 2. April 1985 (1985-04-02) -& JP 59 203931 A (KAWASAKI SEITETSU KK), 19. November 1984 (1984-11-19) | 1 | |
| A | * Zusammenfassung * | 3 | |
| A | DE 44 33 631 A (BOSCH GMBH ROBERT) 28. März 1996 (1996-03-28) * Spalte 1, Zeile 35 – Zeile 53; Abbildungen * | 1,3 | |
| D,A | PFEIFFER B -M ET AL: "SELBSTEINSTELLENDER PID-REGLER" AUTOMATISIERUNGSTECHNISCHE PRAXIS – ATP,DE,OLDENBOURG VERLAG. MUNCHEN, Bd. 40, Nr. 11, 1. November 1998 (1998-11-01), Seiten 50-57, XP000789066 ISSN: 0178-2320 * das ganze Dokument * | 1 | RECHERCHIERTE SACHGEBIETE (Int.Cl.7) G01K F02D G05B |
| A | US 3 892 281 A (BROWN NEIL L) 1. Juli 1975 (1975-07-01) * Zusammenfassung * | 4,5 | |
| A | US 5 544 639 A (SHOUDA HIROFUMI ET AL) 13. August 1996 (1996-08-13) * Zusammenfassung * | 1 | |

-/--

Der vorliegende Recherchenbericht wurde für alle Patentansprüche erstellt

| Recherchenort | Abschlußdatum der Recherche | Prüfer |
|---|---|---|
| DEN HAAG | 7. September 2000 | Ramboer, P |

**Europäisches Patentamt**

# EUROPÄISCHER RECHERCHENBERICHT

Nummer der Anmeldung

EP 00 11 3000

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | DR. RIEGER E.A.: "ZUR RECHNERGESTÜTZTEN PARAMETEROPTIMIERUNG VON PID-REGLERN IM ZEITBEREICH" MESSEN STEUERN REGELN, Bd. 32, Nr. 10, Juli 1989 (1989-07), Seiten 448-452, XP000937623 BERLIN * das ganze Dokument * | 1 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| DEN HAAG | 7. September 2000 | Ramboer, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 11 3000

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2000

| Im Recherchenbericht angeführtes Patentdokument | Datum der Veröffentlichung | Mitglied(er) der Patentfamilie | Datum der Veröffentlichung |
|---|---|---|---|
| US 5605040 A | 25-02-1997 | US 5901553 A | 11-05-1999 |
| DE 2343511 A | 13-03-1975 | CH 586425 A | 31-03-1977 |
| JP 59203931 A | 19-11-1984 | KEINE | |
| DE 4433631 A | 28-03-1996 | IT MI951890 A<br>JP 8114513 A<br>US 5647668 A | 21-03-1996<br>07-05-1996<br>15-07-1997 |
| US 3892281 A | 01-07-1975 | KEINE | |
| US 5544639 A | 13-08-1996 | JP 7119514 A<br>JP 8035418 A<br>DE 4430979 A | 09-05-1995<br>06-02-1996<br>02-03-1995 |

EPO FORM P0461

Für nähere Einzelheiten zu diesem Anhang : siehe Amtsblatt des Europäischen Patentamts, Nr.12/82